# EUROPEAN PATENT APPLICATION

(11) **EP 2 634 438 A2**
(43) Date of publication of application: **04.09.2013**
(21) Application number: 12178214.8
(22) Date of filing: 27.07.2012
(51) Int. Cl.: F16B 7/02, F16B 13/06

(54) **Device for eliminating a clearance in a hole, corresponding door hinge and assembling method**

(30) Priority: 29.02.2012 EP 12001367
(71) Applicant: VALEO Sicherheitssysteme GmbH, 85253 Erdweg (DE)
(72) Inventor: Winter, Andreas, 81827 München (DE)
(74) Representative: Larger, Solène

(57) **Abstract**

The invention relates to a device (1; 101; 201; 301; 401) for eliminating a clearance in a hole of an element, comprising :
- tightening means (27; 127; 227) with a first (29; 129; 229; 429) and a second (31; 231) complementary parts,
- a receiving sleeve (33; 133; 333; 433) able to receive at least one part of the tightening means (27; 127; 227), said receiving sleeve (33; 133; 333; 433) being able to be mounted in the hole for eliminating the clearance when tightening.

Said device (1; 101; 201; 301; 401) further comprises a spacer (35) distinct from the receiving sleeve (33; 133; 333; 433), and the receiving sleeve (33; 133; 333; 433) has an outer shape substantially cylindrical.

The invention also relates to corresponding door hinge and an assembly method.

## Description

The invention relates to a device for eliminating a clearance in a hole of an element. The element may be a hinge belonging to a pivotable door of an automotive vehicle. The vehicle door may be a side door or a tailgate or the lid for closing the engine compartment or the flap for closing a roof opening in a vehicle.

The hinge is thereafter named door hinge.

This invention also relates to such a door hinge comprising a hole in which the device for eliminating a clearance is mounted.

The invention also relates to the method for assembling the device for eliminating a clearance in a hole of an element, such as the door hinge.

As an example, on vehicles equipped with an automatic tailgate two modular drive units for actuating the tailgate are generally connected to two door hinges.

A modular drive unit comprises in a known manner a motor, a gear assembly and transmission means connected to the door hinge. For example, a lever is on one end screwed to a moving part of the hinge. And this lever may have a bushing put on a pin or axis on the hinge. Moreover, the modular drive unit may also be tightened with the door hinge trough a device mounted in a hole of the hinge. To that end, such a device traditionally has tightening means such as a bolt with a nut.

Currently, the hole of the door hinge is an oval hole and for eliminating the clearance between the bolt and the hole, an eccentric bolt is used. The eccentric bolt is turned in the oval hole until it locks, meaning the clearance is eliminated. And then the nut may be tightened.

A significant problem is that the concept with the eccentric bolt requires more effort for assembly.

There is thus a need for replacing it.

A solution consists in replacing the eccentric bolt by an assembly of a conical bolt and a spacer with split sleeve in a single piece. Indeed when tightening the conical pin of the bolt causes the sleeve to bend outwards.

This eliminates the clearance in the hole of the hinge.

However it was realized that the contact of the sleeve in the hole is only punctual due to the conical form of the bolt in the oval hole.

So the idea to use this conical bolt and a spacer with split sleeve for eliminating the clearance by tightening the bolt works at the beginning. But, due to the punctual contact of the sleeve in the hole the connection may not stay solid after a load is applied. After a while a clearance may develop again.

Another problem of this solution is that the load which is transmitted is concentrated in one point.

The object of the present invention is thus to overcome these drawbacks of the prior art.

To this end, one subject of the invention is to provide a device for eliminating a clearance in the hole of an element in a sustainable manner while improving the load transmission.

This object is achieved according to the invention by a device for eliminating a clearance in a hole of an element, comprising:
- tightening means with a first and a second complementary parts,
- a receiving sleeve able to receive at least one part of the tightening means, said receiving sleeve being able to be mounted in the hole for eliminating the clearance when tightening,
wherein :
- said device further comprises a spacer distinct from the receiving sleeve, and
- the receiving sleeve has an outer shape substantially cylindrical.

When tightening the exterior diameter of the receiving sleeve increases and the clearance in the mounting hole is reduced until it is completely eliminated while the receiving sleeve keeps a cylindrical outer shape.

The receiving sleeve expands uniformly in a parallel way of the mounting hole and therefore the form fit to the mounting hole as well as the transmission of the load is improved.

Indeed, the receiving sleeve and the wall defining the hole are in contact by a line. Therefore, there is no more punctual contact. Thus the connection is more robust.

Moreover, the effort in assembly is less than the eccentric bolt concept as only tightening is required without needing an adjustment of the eccentric bolt in addition.

The device according to the invention may also comprise one or more of the following features, taken separately or in combination:
- at least the first part of the tightening means has a substantially conical outer shape able to be inserted in the receiving sleeve,
- the receiving sleeve has an inner shape substantially conical;
- said device comprises an intermediate sleeve arranged between the tightening means and the receiving sleeve, and wherein said intermediate sleeve comprises at least two partial sleeves movably mounted one to the other;
- said intermediate sleeve comprises two partial sleeves respectfully in the shape of a half-cylinder with at least one longitudinal slope;
- the receiving sleeve is a single piece;
- the receiving sleeve is a slotted sleeve;
- the receiving sleeve comprises at least two sleeve segments assembled together;
- said at least two sleeve segments comprise respectfully at least one groove for receiving said at least one snap ring;
- the dimensions of the receiving sleeve are substantially equal to the dimensions of said hole;
- said device comprises a supplementary sleeve arranged axially between the receiving sleeve and the spacer;
- the tightening means include a bolt and a nut and wherein the bolt is at least partially provided with a substantially conical outer shape;
- the tightening means include a sleeve receiving a screw and wherein the sleeve has a substantially conical outer shape;
- said device comprises means for blocking in rotation at least one part of the tightening means able to be inserted inside the spacer;
- said device comprises means for blocking in rotation the receiving sleeve.

The invention also related to a door hinge for a vehicle including a hole for fixing said door hinge to a modular drive unit of a vehicle door and a device for eliminating the clearance in the hole of said door hinge comprising:
- tightening means with a first and a second complementary parts,
- a receiving sleeve able to receive at least the first part of the tightening means, said receiving sleeve being able to be mounted in the hole for eliminating the clearance when tightening,
- a spacer arranged between said door hinge and the modular drive unit,
wherein :
- the spacer is distinct from the receiving sleeve, and
- the receiving sleeve has an outer shape substantially cylindrical.

The invention relates to the method for assembling the device as described above in a hole of an element, comprising the steps of:
- inserting partially a first part of the tightening means in the receiving sleeve,
- introducing the receiving sleeve into said hole,
- putting the spacer at one end of the receiving sleeve,
- screwing the second complementary part onto the first part of the tightening means, and
- rotating said first part of the tightening means for further introduction in the receiving sleeve until the outside surface of the receiving sleeve comes in contact with the inside wall of said element delimiting said hole.

Other characteristics and advantages of the invention will emerge more clearly on reading the following description, which is given as a non-limiting illustrative example, and the attached drawings, among which:
- figure 1 shows a schematically illustrated modular drive unit for pivoting a vehicle door, the hinge of the vehicle door to be pivoted and a device for eliminating a clearance in a hole of the door hinge,
- figure 2 shows a perspective view of a roof and a pillar of a corresponding vehicle comprising the door hinge, the device for eliminating the clearance and the modular drive unit of figure 1,
- figure 3 shows a schematic perspective view of the door hinge, the device for eliminating the clearance and the modular drive unit of figure 1,
- figure 4 shows a perspective view of the device for eliminating the clearance and the modular drive unit of figure 3,
- figure 5a shows a schematic sectional view of the device for eliminating a clearance according to a first embodiment,
- figure 5b is an exploded view of the device for eliminating a clearance of figure 5a,
- figure 6a is a transversal sectional view of a device for eliminating a clearance provided with means for blocking in rotation the receiving sleeve according to a first alternative,
- figure 6b is a transversal sectional view of a device for eliminating a clearance provided with means for blocking in rotation the receiving sleeve according to a second alternative,
- figure 7a shows a schematic sectional view of the device for eliminating a clearance of figure 5a in a pre-mounted position in a hole of the door hinge during tightening,
- figure 7b shows a schematic sectional view of the device for eliminating a clearance of figure 5a in a mounted position in a hole of the door hinge after tightening,
- figure 8 shows a schematic sectional view of the device for eliminating a clearance according to a second embodiment,
- figure 9 is an exploded view of the device for eliminating a clearance of figure 8,
- figure 10 shows a schematic sectional view of the device for eliminating a clearance according to a third embodiment,
- figure 11 is an exploded view of the device for eliminating a clearance of figure 10,
- figure 12 shows a schematic sectional view of the device for eliminating a clearance according to a fourth embodiment,
- figure 13a is an exploded view of the device for eliminating a clearance of figure 12,
- figure 13b is a transversal sectional view of the device for eliminating a clearance of figure 13a,
- figure 14 shows a schematic sectional view of the device for eliminating a clearance according to a fifth embodiment, and
- figure 15 is an exploded view of the device for eliminating a clearance of figure 14.

In these figures, identical elements carry the same references.

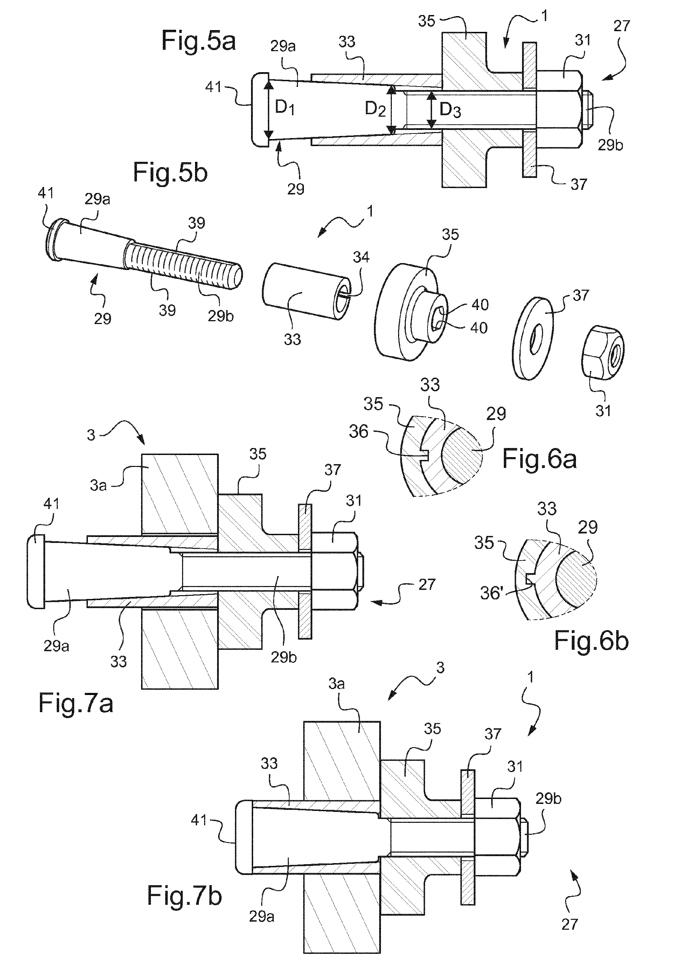

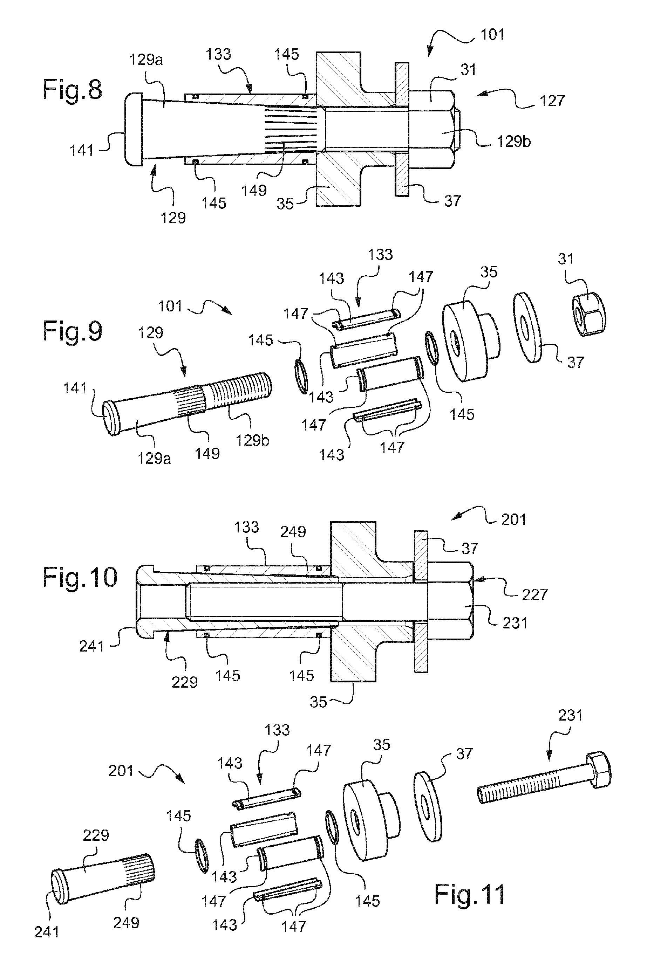

Elements from figures 8 and 9 corresponding to elements from figures 5a to 7b carry the same references preceded by the hundreds digit 1.

By the same way, elements from figures 10 and 11, corresponding to elements from figures 5 to 7b carry the same references preceded by the hundreds digit 2.

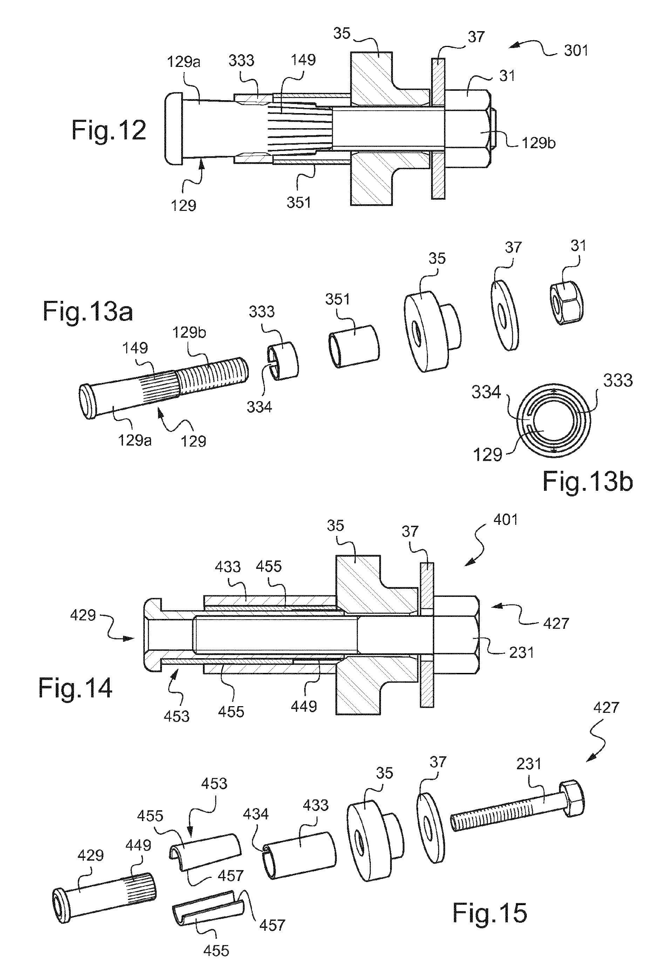

Also, elements from figures 12 and 13a, 13b, corresponding to elements from figures 5a to 7b carry the same references preceded by the hundreds digit 3.

And, elements from figures 14 and 15 corresponding to elements from figures 5a to 7b carry the same references preceded by the hundreds digit 4.

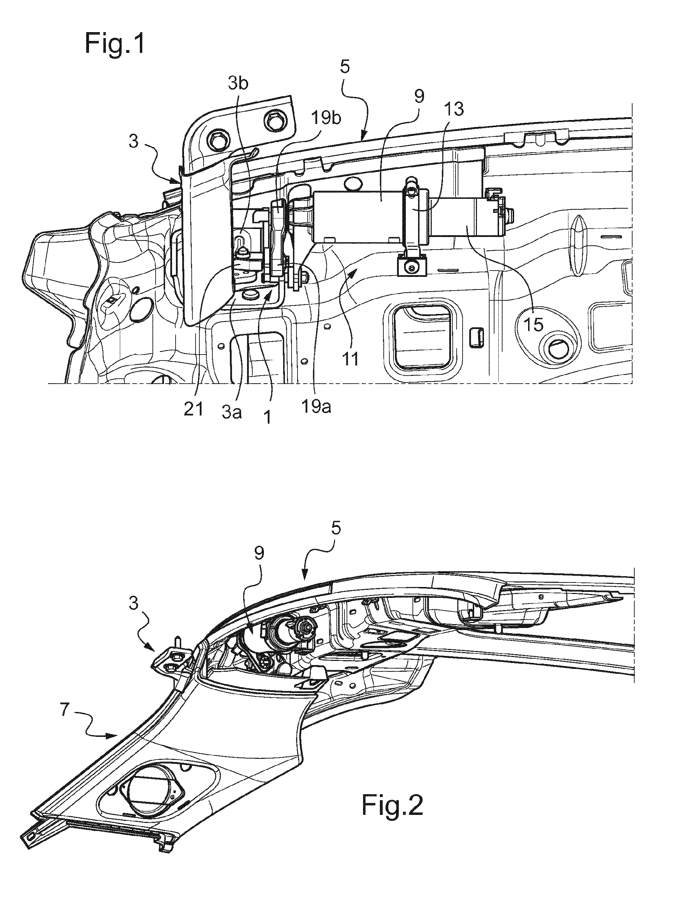

In figure 1, reference 1 indicates a device 1 for eliminating a clearance in a hole of an element in which the device 1 is mounted.

The invention is particularly aimed at eliminating a clearance in a hinge 3 of a vehicle door. Said hinge 3 is thereafter named door hinge 3.

In this document, the term "vehicle door" is understood quite generally to mean a pivotable part for closing a vehicle opening. The vehicle door may therefore involve an element selected in the list consisting of a side door, a tailgate, the lid for closing the engine compartment and the flap for closing a roof opening in a vehicle.

As an example, the following description refers to a tailgate which can be pivoted via a door hinge 3.

Figure 2 shows partially the roof 5 and a pillar 7 of a corresponding vehicle comprising such a door hinge 3 for pivoting the tailgate (not illustrated).

The vehicle door, by instance the tailgate, can be actuated by a modular drive unit 9 connected to the door hinge 3. Generally, in a vehicle equipped with automatic tailgate two modular drive units 9 are respectfully connected to one of two door hinges 3.

In the illustrated example of figures 1 and 2, the modular drive unit 9 is arranged on and fastened to a roof support 11.

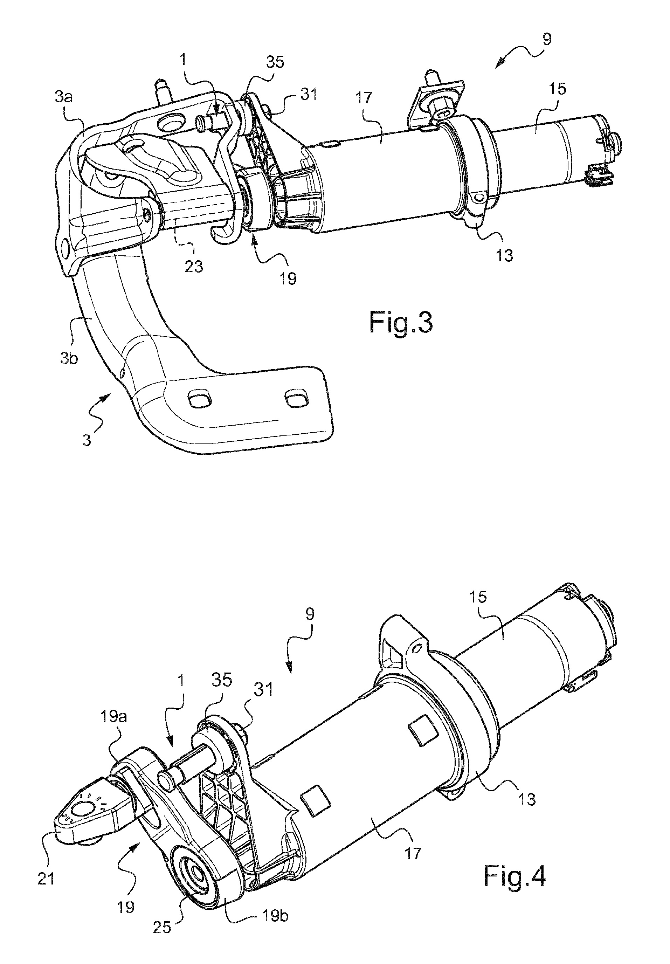

Such a modular drive unit 9 is more visible on figures 3 and 4.

A bracket 13 may be provided for fastening said modular drive unit 9 to the roof support 11.

This modular drive unit 9 comprises an electric motor 15. The modular drive unit 9 also comprises a tubular housing 17 receiving a gear assembly connected to the electric motor 15, and a transmission means 19 connected on one hand to the gear assembly and on the other hand to the door hinge 3.

The transmission means 19 may comprise a lever 19 arranged between the modular drive unit 9 and the door hinge 3.

More precisely, the door hinge 3 may comprise a first fixed hinge body 3a and a second moving hinge body 3b. The first fixed hinge body 3a is fixed to the roof support 11 and the second moving hinge body 3b is mounted in a pivotable manner.

The lever 19 may be fastened to one end 19a to the second moving hinge body 3b via fixation means 21 (figures 1 and 4). For example, this end 19a may be screwed to the second moving hinge body 3b. The lever 19 is also fastened to its other end 19b to the first fixed hinge body 3a and to the modular drive unit 9.

The first hinge body 3a includes a hinge axis 23 attached to the transmission means 19 of the modular drive unit 9, for example to end 19b of the lever 19 opposed to end 19a connected to the second moving hinge body 3b. The hinge axis 23 may be connected to the lever 19 via a bushing 25 (figure 4). Then, the second hinge body 3b is mounted in a manner such that it can pivot about the hinge axis 23 of the first hinge body 3a (figure 3).

The first hinge body 3a is further maintained with the modular drive unit 9 via the device for eliminating a clearance 1 which is mounted in a hole of the first hinge body 3a. This hole may be an oval hole.

A first embodiment of the device 1 for eliminating the clearance is shown on figures 5a to 7b.

Such a device 1 comprises :
- tightening means 27 with a first 29 and a second 31 complementary parts,
- a substantially cylindrical receiving sleeve 33 able to receive at least one part of the tightening means 27, said receiving sleeve 33 being able to be mounted in the hole of the door hinge 3 for eliminating the clearance when tightening, and
- a spacer 35 distinct from the receiving sleeve 33 destined to be arranged between the door hinge 3 and the modular drive unit 9 as represented on figure 3 .

According to this first embodiment the tightening means 27 include a bolt 29 and a nut 31, the first part being a bolt 29 and the second part being a nut 31. The bolt 29 is a threaded bolt as it can be seen on figure 5b.

The bolt 29 is inserted in the cylindrical receiving sleeve 33.

The bolt 29 is then inserted in the spacer 35.

More precisely, in the example shown, the bolt 29 includes two bolt parts : a front portion 29a and a pin 29b, particularly a threaded pin 29b.

After tightening, at the assembled state of the device (figure 7b), the front portion 29a is inserted in the receiving sleeve 33 and the pin 29b is inserted in the spacer 35 and the nut 31. Moreover, the end of the pin 29b protrudes from said device 1.

The bolt 29 is at least partially provided with a substantially conical outer shape. That means at least one part of the bolt 29 has a substantially conical outer shape.

In this example, it is the front portion 29a of the bolt 29 which has a substantially conical outer shape.

More precisely, the front portion 29a is substantially conical and the pin 29b is substantially cylindrical.

Thus as illustrated on figure 5a, the conical front portion 29a has a progressively decreasing diameter with the largest diameter D₁ at the end of the bolt 29 opposed to the protruded end of the pin 29b and the nut 31. The smallest diameter D₂ of the front portion 29a is at the end of the front portion 29a opposed to the largest diameter D₁.

The pin 29b of the bolt 29, substantially cylindrical, has a diameter D₃ smaller than the smallest diameter D₂ of the front portion 29a of the bolt 29.

The receiving sleeve 33 has an inner shape substantially conical corresponding to the substantially conical outer shape of the front portion 29a of the bolt 29. Thus, the conical outer shape of the front portion 29a of the bolt 29 correlates to the conical inner shape of the cylindrical receiving sleeve 33.

This receiving sleeve 33 may be a single piece.

Moreover, the receiving sleeve 33 is a slotted sleeve or slit sleeve 33 with a longitudinal slot or slit 34 visible on figure 5b. Due to this slot 34 the diameter of the slotted sleeve 33 can expand when the bolt 29 is rotating and thus fit the clearance in the hole of the door hinge 3. When tightening, it is the plain part of the receiving sleeve 33 that pushes to fit the clearance in the receiving hole.

Thus, the conical bolt 29 and the conical inner shape of the slotted sleeve 33 enables the slotted sleeve 33 to adapt a wide range of exterior diameters when the conical bolt 29 is moved in axial direction whereas the slotted sleeve 33 keeps a cylindrical outer shape.

The receiving sleeve 33 and the spacer 35 do not form a single piece but two distinct elements assembled together during the assembly of the device. Thus, the spacer 35 and the receiving sleeve 33 are made in two parts.

The spacer 35 may be made in a material different from the one of the receiving sleeve 33.

The spacer is in particular arranged between the first fixed hinge body 3a and the modular drive unit 9.

The spacer 35 may have a first part substantially cylindrical and an extension also substantially cylindrical but with a smaller diameter. Such an extension fits into a corresponding hole in the modular drive unit 9 (figure 3). The spacer 35 is thus arrested in the modular drive unit 9.

In the embodiment shown on figure 5a, the device 1 further comprises a washer 37 interposed between the spacer 35 and the nut 31. The washer 37 is destined to be interposed between the modular drive unit 9 and the nut 31.

The washer 37 and the nut 31 are on the end of the pin 29b of the bolt 29 to tighten the bolt 29.

Furthermore, the bolt 29 may be provided with two opposite areas 39 which are substantially flat. Only one flat area 39 is clearly visible on figure 5b. These flat opposite areas 39 are intended for being inserted in the spacer 35 and avoiding the rotation of the bolt 29. In particular, the flat areas 39 are provided on the pin 29b of the bolt 29. The pin 29b of the bolt 29 is flattened on two opposite sides to fit through a related hole in the spacer 35. As visible on figure 5b, the spacer 35 may have corresponding flattened areas 40.

Thus, the rotation of the bolt 29 is blocked in the spacer 35. Therefore, the bolt 29 is held in place and cannot rotate when the nut 31 is tightened.

Of course, other means for blocking the bolt 29 in rotation in the spacer 35 may be provided.

Furthermore, the device 1 may comprise means for blocking the receiving sleeve 33 in rotation. As illustrated on figure 6a and figure 6b, the receiving sleeve 33 and the spacer 35 are connected in a form-blocking manner in order to prevent from the rotation of the receiving sleeve 33. The form-blocking connection may be obtained by at least one rib 36, 36' engaging in a complementary notch. The rib or ribs 36 may be formed on the spacer 35 and thus engage an associated notch on the receiving sleeve 33 (figure 6a) or may be formed on the receiving sleeve 33 and thus engage an associated notch on the spacer 35 (figure 6b).

Of course, other means for blocking the receiving sleeve 33 in rotation may be provided.

At last, the bolt 29 is provided with a head 41. The front portion 29a of the bolt extends from the head 41. The bolt head 41 is thus opposed to the protruded end of the pin 29b and the nut 31.

After tightening, the bolt head 41 abuts against the slotted sleeve 33 as illustrated on figure 7b.

Furthermore, to eliminate the clearance in the hole of the door hinge 3, the bolt 29 is rotated until it locks. Then the nut 31 is tightened.

Thus, during tightening (figure 7a) by rotating the bolt 29, the latter passes through the slotted sleeve 33, the spacer 35, the washer 37.

During rotation of the bolt 29 while being inserted into the slotted sleeve 33, the bolt 29, in particular the conical part 29a of the bolt 29, increases the diameter of the slotted sleeve 33. As the diameter increases all along the length of the slotted sleeve 33 the contact face of the slotted sleeve 33 with the hole wall of the door hinge 3 is large and the clearance is eliminated.

By this way the contact between the device 1 and the hole in which the device 1 is mounted evolves in a surface and therefore enables a proper transmission of the load.

The bolt 29 holds together the assembly by the pressure exerted by its head 41 at one end and the pressure of the nut 31 that screws onto the other end (figure 7b).

Thus, the method for assembling such a device 1 in a hole by instance of the door hinge 3 comprises a first step in which the bolt 29 is partially inserted in the receiving sleeve 33 which is then introduced into the hole. The spacer 35 and the washer 37, in this order, are put at one end of the receiving sleeve 33. The nut 31 is then screwed onto the bolt 29.

Then the bolt 29 is introduced further in the receiving sleeve 33 by rotation until the outside surface of the receiving sleeve 33 comes in contact with the inside wall of the door hinge 3 delimiting the comprising hole. The bolt 29 is thus an adjusting bolt for eliminating the clearance in the comprising hole.

The rotation of the bolt 29 is then blocked in the spacer 35.

A second embodiment of a device 101 for eliminating a clearance is represented on figures 8 and 9.

This second embodiment differs from the first one in that the receiving sleeve 133 is not a single piece. On the contrary, the receiving sleeve 133 comprises at least two sleeve segments 143 assembled together. In this second embodiment illustrated on figure 9, the receiving sleeve 133 comprises four sleeve segments 143.

These sleeve segments 143 are shaped in a manner to form a receiving sleeve 133 with a substantially conical inner shape when assembled together.

Holding means 145 are provided in order to maintain the sleeve segments 143 together. The holding means 145 are advantageously elastic means to enable the diameter of the receiving sleeve 133 to expand during rotation of the bolt 129 when inserted into the receiving sleeve 133 and thus filling the clearance in the comprising hole.

The holding means 145 may comprise one or more snap rings 145. These snap rings 145 are slit rings 145 as more visible on figure 9. In a complementary manner, the sleeve segments 143 comprise respectfully at least one groove 147 for receiving a snap ring 145.

In the illustrated embodiment, two snap rings 145 are provided at each end of the receiving sleeve 133 in order to maintain the four sleeve segments 143 together. To this end, each sleeve segment 143 comprises two grooves 147 for receiving said two snap rings 145.

Of course, other holding means for maintaining the sleeve segments 143 together may be provided.

Such a sleeve 133 with multiple sleeve segments 143 held together is easier to manufacture as a single piece sleeve substantially cylindrical with an inner shape substantially conical as described in the first embodiment.

Another difference between this second embodiment and the first embodiment described in reference to figures 5 to 7b is that the rotation of the bolt 129 in the spacer 35 is not blocked due to flat areas.

In this second embodiment the bolt 129 is provided with an anti-skid portion such as a knurled portion 149.

Such a knurled portion 149 is easier to manufacture than a form fit as the flat areas previously described.

This knurled portion 149 may be provided on the pin 129b of the bolt 129 which is aimed at being inserted into the spacer 35. In this case, the bolt 129 and the spacer 35 may not have flat areas.

Of course, in alternative or in complement, flat areas as described in first embodiment may be used in this second embodiment.

The assembling procedure remains the same as previously described in reference to the first embodiment for tightening and eliminating the clearance in the hole of the door hinge 3.

A third embodiment of the device 201 for eliminating a clearance is illustrated on figures 10 and 11.

This third embodiment differs from the second embodiment described in reference to figures 8 and 9 by the tightening means 227.

The tightening means 227 don't include a bolt with a nut. In this third embodiment the tightening means 227 include a sleeve 229 receiving a screw 231 and wherein the sleeve 229 has internal threads. The sleeve 229 is the first part and the screw 231 is the second complementary part. In this third embodiment it is the sleeve 229 which has a substantially conical outer shape.

To sum up the conical bolt is replaced by a conical sleeve 229 and the nut is replaced by a screw 231.

Thus during tightening by rotating the screw 231, the latter passes through the the washer 37, the spacer 35, and the conical sleeve 229 itself inserted into the receiving sleeve 133.

During rotation of the conical sleeve 229 receiving the screw 231 while being inserted into the receiving sleeve 133, the conical sleeve 229 increases the diameter of the receiving sleeve 133 and the clearance is eliminated.

In the same manner as the second embodiment, the conical sleeve 229 may comprise a knurled portion 249 in order to avoid the rotation of the conical sleeve 229 in the spacer 35. This knurled portion 249 is provided at the end of the conical sleeve 229 opposed to the head 241 of the conical sleeve 229, which head 241 abuts against the receiving sleeve 133 when tightened. This knurled portion 249 is destined to be inserted in the spacer 35.

Of course, other means for blocking the conical sleeve 229 in rotation in the spacer 35 may be provided, as for example flat areas as described in the first embodiment.

In the third embodiment shown on figures 10 and 11, the receiving sleeve 133 comprises four sleeve segments 143 as described in the second embodiment. Of course, a slotted sleeve in a single piece as described in the first embodiment may also be used.

Thus, the method for assembling such a device 201 in the hole of the door hinge 3 comprises a first step in which the sleeve 229 is partially inserted in the receiving sleeve 133. The receiving sleeve 133 and the sleeve 229 inside are then introduced into the hole. The spacer 35 and the washer 37, in this order, are put at one end of the receiving sleeve 133. The screw 231 is then screwed into the sleeve 229.

Then the sleeve 229 of the tightening means is introduced further in the receiving sleeve 133 by rotation until the outside surface of the receiving sleeve 133 comes in contact with the inside wall of the door hinge 3 delimiting the comprising hole.

Then the rotation of the sleeve 229 of the tightening means 227 is blocked in the spacer 35.

A fourth embodiment shown on figures 12 and 13a, 13b of the device 301 for eliminating a clearance differs from the first embodiment in that the receiving sleeve with substantially conical inner shape is replaced by a receiving sleeve 333 which is substantially cylindrical and matches the dimensions of the hole. That means the dimensions of the receiving sleeve 333 are substantially equal to the dimensions of the comprising hole so that the receiving sleeve 333 is only in the length of the comprising hole.

As in the first embodiment, the receiving sleeve 333 is a slotted sleeve 333 with a longitudinal slot 334. Of course, when tightening the diameter of the receiving sleeve 333 increases in the direction illustrated by the two arrows on figure 13b and it is the plain part of the receiving sleeve 333 that pushes to match the receiving hole.

In that fourth embodiment, the device 301 comprises a supplementary sleeve 351 arranged between the receiving slotted sleeve 333 and the spacer 35. The supplementary sleeve 351 is arranged axially between the receiving slotted sleeve 333 and the spacer 35, what means about the longitudinal axis of the device 301.

This cylindrical slotted sleeve 333 is easier to manufacture than a slotted sleeve with conical inner shape as described in reference to the first embodiment.

The supplementary sleeve 351 is a non-slotted sleeve with a substantially cylindrical shape.

This supplementary sleeve 351 is used as a spacer.

Another difference between this fourth embodiment and the first one described in reference to figures 5 to 7b is that the rotation of the bolt 129 in the spacer 35 is not blocked thanks to flat areas but the bolt 129 is provided with a knurled portion 149 as described in the second embodiment. By the way, the spacer 35 doesn't need to have corresponding flat areas.

Of course, a bolt 129 with flat areas as described in first embodiment may be used in this third embodiment.

The mounting procedure remains the same as previously described for tightening and eliminating the clearance in the hole.

Indeed, to eliminate the clearance in the hole of the door hinge 3, the bolt 129 is rotated until it locks. Then the nut 31 is tightened.

During rotation of the bolt 129 while being inserted into the receiving slotted sleeve 333, the bolt 129, in particular the conical part 129a of the bolt 129, increases the diameter of the receiving slotted sleeve 333 in order to fill the clearance.

Thus, the method for assembling such a device 301 in the hole of the door hinge 3 comprises a first step in which the bolt 129 is partially inserted in the receiving sleeve 333 which is then introduced into the hole. The supplementary sleeve 351, the spacer 35 and the washer 37, in this order, are put at one end of the receiving sleeve 333. The nut 31 is then screwed onto the bolt 129.

Then the bolt 129 is introduced further in the receiving sleeve 333 and the supplementary sleeve 351 by rotation until the outside surface of the receiving sleeve 33 comes in contact with the inside wall of the door hinge 3 delimiting the comprising hole.

Then, the rotation of the bolt 129 is blocked in the spacer 35.

In a fifth embodiment of the device 401 for eliminating a clearance illustrated on figures 14 and 15, the device 401 differs from the device 201 according to the third embodiment described in reference of figures 10 and 11, in that the sleeve 429 of the tightening means 427 is not a conical sleeve but cylindrical.

The cylindrical sleeve 429 is inserted in an intermediate sleeve 453 arranged between the tightening means 427 and the receiving sleeve 433.

The intermediate sleeve 453 is arranged between the tightening means 427 and the receiving sleeve 433 transversally about the longitudinal axis of the device 401.

The receiving sleeve 433 is thus an external sleeve 433.

In that embodiment, the external receiving sleeve 433 is substantially cylindrical.

Another difference with the third embodiment is that the external receiving sleeve 433 is a single piece as in the first embodiment but the inner shape of the external receiving sleeve 433 is also cylindrical.

Further, the external receiving sleeve 433 is a slotted sleeve 433 with a longitudinal slot 434 enabling the diameter of the external receiving sleeve 433 to expand during rotation of the tightening means 427.

With regard to the intermediate sleeve 453, it may comprise at least two partial sleeves 455 shaped in a manner to form a substantially cylindrical form when gathered.

According to the fifth embodiment illustrated on figure 15, the intermediate sleeve 453 comprises two facing half sleeves 455. These two half sleeves 455 may be two half-cylinders 455.

Indeed, each half sleeve 455 has a longitudinal slope 457 complementary to a longitudinal slope 457 of the facing half sleeve 455.

In particular, the slopes 457 of the half sleeves 455 may evolve in opposite senses. As an example, the slope 457 of the half sleeve 455 above on figure 15 increases in a first sense, from the right to the left in reference to figure 15, whereas the slope 457 of the half sleeve 455 below on figure 15 increases in a second sense opposed to the first sense, that means from the left to the right in reference to figure 15.

Furthermore, when tightening, the partial sleeves 455 are moving relatively one to the other in opposite directions so that they are arranged in a shifted way one to the other along the longitudinal axis of the partial sleeves 455. Thus, the diameter of the receiving sleeve 433 increases.

Thus, in this fifth version, partial sleeves, notably two half sleeves 455, are used. These two half sleeves 455 are kept in place by the external receiving slotted sleeve 433.

The slopes 457 (visible on figure 15) of both half sleeves 455 cause the slotted sleeve 433 to expand in diameter and therefore fill the clearance during rotation of tightening means 227.

Thus, the method for assembling such a device 201 in the hole of the door hinge 3 comprises a first step in which the sleeve 229 of the tightening means is partially inserted in the intermediate sleeve 453 retained by the receiving sleeve 433. The receiving sleeve 433 and the sleeve 229 of the tightening means and the intermediate sleeve 453 inside are then introduced into the hole. The spacer 35 and the washer 37, in this order, are put at one end of the receiving sleeve 133. The screw 231 is then screwed into the sleeve 229 of the tightening means 227.

Then the sleeve 229 of the tightening means 227 is introduced further in the intermediate sleeve 453 in the receiving sleeve 433 by rotation until the outside surface of the receiving sleeve 433 comes in contact with the inside wall of the door hinge 3 delimiting the comprising hole.

Then the rotation of the sleeve 229 of the tightening means 227 is blocked in the spacer 35.

Of course, the different embodiments described above may be combined.

By instance, a bolt 29 with two flat areas 39 or a bolt 129 with a knurled portion 149 may be used equally. A receiving sleeve 33, 333, 433 in a single piece as described in the first, the fourth or the fifth embodiment or a receiving sleeve 133 in several sleeve segments 143 as described in the second and the third embodiments may be used indifferently. Tightening means 27, 127 with a bolt 29, 129 with a nut 31 as described in the first, the second or the fourth embodiment or tightening means 227 with a screw 229 and a sleeve 231 as described in the third and the fifth embodiments may be used without distinction.

Finally, the conical shape may be formed indifferently on the outer shape of the bolt 29, 129 or sleeve 229 of tightening means 27, 127, 227 and the corresponding inner shape of the receiving sleeve 33, 133 referring to first, second and third embodiments, or only on the outer shape of the bolt 129 as described in the fourth embodiment or even on the outer shape of the sleeve 229 of the tightening means 227 and on an intermediate sleeve 453 as described in the fifth embodiment.

Thus, in the different embodiments previously described, the conical shape of at least one part 29, 129, 229, of the tightening means and a corresponding conical inner shape of the receiving sleeve 33, 133 or intermediate sleeve 453, or the cylindrical slotted sleeve 333 only in the length of the comprising hole, enables that during tightening contact between the receiving sleeve 33, 133, 333, 433 and the comprising hole evolves in a surface and therefore enables filling the clearance.

Further, during rotation of the tightening means 27, 127, 227 the receiving sleeve 33, 133, 333, 433 expands in a parallel way of the comprising hole and therefore the form fits to the mounting hole as well as the transmission of the load is improved.

Thus, with such a device for eliminating a clearance 1, 101, 201, 301, 401, an improved form fit to the mounting hole is achieved.

Moreover, the effort in assembly is less than with a known concept of state in the art with an eccentric bolt since with the invention only a nut 31 or screw 231 has to be tightened whereas in the state of the art concept of eccentric bolt an additional adjustment of the eccentric bolt is required.

This enables to adapt a wide range of hole diameters when the conical part of the tightening means 27, 127, 227 is moved in axial direction whereas the receiving sleeve 33, 133, 233, 433 keeps a cylindrical outer shape.

## Claims

1. Device (1; 101; 201; 301; 401) for eliminating a clearance in a hole of an element, comprising :
- tightening means (27; 127; 227) with a first (29; 129; 229; 429) and a second (31; 231) complementary parts,
- a receiving sleeve (33; 133; 333; 433) able to receive at least one part of the tightening means (27; 127; 227), said receiving sleeve (33; 133; 333; 433) being able to be mounted in the hole for eliminating the clearance when tightening,
wherein :
- said device (1; 101; 201; 301; 401) further comprises a spacer (35) distinct from the receiving sleeve (33; 133; 333; 433), and
- the receiving sleeve (33; 133; 333; 433) has an outer shape substantially cylindrical.

2. Device (1; 101; 201; 301; 401) for eliminating a clearance in a hole of an element, wherein at least the first part (29; 129; 229) of the tightening means (27; 127; 227) has a substantially conical outer shape able to be inserted in the receiving sleeve (33; 133; 333; 433).

3. Device according to claim 2, wherein the receiving sleeve (33; 133) has an inner shape substantially conical.

4. Device according to claim 1, comprising an intermediate sleeve (453) arranged between the tightening means (227) and the receiving sleeve (433), and wherein said intermediate sleeve (453) comprises at least two partial sleeves (455) movably mounted one to the other.

5. Device according to claim 4, wherein said intermediate sleeve (453) comprises two partial sleeves (455) respectfully in the shape of a half-cylinder with at least one longitudinal slope (457).

6. Device according to any one of claims 1 to 5, wherein the receiving sleeve (33; 333; 433) is a single piece.

7. Device according to claim 6, wherein the receiving sleeve (33; 333; 433) is a slotted sleeve.

8. Device according to any one of claims 1 to 5, wherein the receiving sleeve (133) comprises at least two sleeve segments (143) assembled together.

9. Device according to claim 8, comprising at least one snap ring (145) and wherein said at least two sleeve segments (143) comprise respectfully at least one groove (147) for receiving said at least one snap ring (145).

10. Device according to any one of the preceding claims, wherein the dimensions of the receiving sleeve (333) are substantially equal to the dimensions of said hole.

11. Device according to any one of the preceding claims, comprising a supplementary sleeve (351) arranged axially between the receiving sleeve (333) and the spacer (35).

12. Device according to any one of claim 1 to 11, wherein the tightening means (27; 127) include a bolt (29; 129) and a nut (31) and wherein the bolt (29) is at least partially provided with a substantially conical outer shape.

13. Device according to any one of claim 1 to 11, wherein the tightening means (227) include a sleeve (229) receiving a screw (231) and wherein the sleeve (229) has a substantially conical outer shape.

14. Device according to any one of the preceding claims, comprising means for blocking in rotation (39; 149; 249) at least one part (29; 129; 229) of the tightening means (27; 127; 227) able to be inserted inside the spacer (35).

15. Device according to any one of the preceding claims, comprising means for blocking in rotation (36, 36') the receiving sleeve (33; 333).

16. Door hinge (3) for a vehicle including a hole for fixing said door hinge (3) to a modular drive unit (9) of a vehicle door and a device (1, 101, 201; 301; 401) for eliminating the clearance in the hole of said door hinge (3) comprising :
- tightening means (27; 127; 227) with a first (29; 129; 229; 429) and a second (31; 231) complementary parts,
- a receiving sleeve (33; 133; 333; 433) able to receive at least the first part (29; 129; 229; 429) of the tightening means (27; 127; 227), said receiving sleeve (33; 133; 333; 433) being able to be mounted in the hole for eliminating the clearance when tightening,
- a spacer (35) arranged between said door hinge (3) and the modular drive unit (9),
wherein :
- the spacer (35) is distinct from the receiving sleeve (33; 133; 333; 433), and
- the receiving sleeve (33; 133; 333; 433) has an outer shape substantially cylindrical.

17. Method for assembling a device according to any one of claims 1 to 15 in a hole of an element, comprising the steps of :
- inserting partially a first part (29; 129; 229; 429) of the tightening means (27; 127; 227) in the receiving sleeve (33; 133; 333; 433),
- introducing the receiving sleeve (33; 133; 333; 433) into said hole,
- putting the spacer (35) at one end of the receiving sleeve (33; 133; 333; 433),
- screwing the second complementary part (31; 231) onto the first part (29; 129; 229) of the tightening means (27; 127; 227), and
- rotating said first part (29; 129; 229; 429) of the tightening means (27; 127; 227) for further introduction in the receiving sleeve (33; 133; 333; 433) until the outside surface of the receiving sleeve (33; 133; 333; 433) comes in contact with the inside wall of said element delimiting said hole.
